# EUROPEAN PATENT SPECIFICATION

(11) **EP 3 223 341 B1**
(45) Date of publication and mention of the grant of the patent: **19.06.2019**
(21) Application number: 16382125.9
(22) Date of filing: 22.03.2016
(51) Int. Cl.: H01M 2/30, H01M 10/625, H01M 10/6556, H01M 10/6563, H01M 2/12, B60L 11/18, B60S 5/06, H01M 2/10, H01M 10/6551, B60K 1/04

(54) **AUXILIARY DETACHABLE BATTERY SYSTEM, SUPPORT AND REMOVABLE BATTERY MODULE OF SAID AUXILIARY DETACHABLE BATTERY SYSTEM**
ZUSÄTZLICHES LÖSBARES BATTERIESYSTEM, TRÄGER UND ABNEHMBARES BATTERIEMODUL DES ZUSÄTZLICHEN LÖSBAREN BATTERIESYSTEMS
SYSTÈME DE BATTERIE AMOVIBLE AUXILIAIRE, SUPPORT ET MODULE DE BATTERIE AMOVIBLE DUDIT SYSTÈME DE BATTERIE AMOVIBLE AUXILIAIRE

(43) Date of publication of application: 27.09.2017
(73) Proprietor: Fico Triad, S.A., 08028 Barcelona (ES)
(72) Inventor: MOTGER GRAUS, Francisco Javier, 08028 Barcelona (ES); PLANAS GIRONA, Albert, 08028 Barcelona (ES)
(74) Representative: Elzaburu S.L.P.

(56) References cited:
- EP-A1- 2 159 862
- EP-A1- 2 548 211
- EP-A2- 2 210 803
- DE-A1-102009 034 698
- DE-A1-102011 076 981

## Description

### FIELD OF THE INVENTION

The invention is related to an auxiliary detachable battery system which is intended for being located in a luggage compartment of a vehicle. The invention is also directed to a support intended to be located in said luggage compartment and to a removable battery module configured for being attached to said support.

### BACKGROUND OF THE INVENTION

The storage elements in an electric vehicle remain one of the key obstacles to wide-scale, successful deployment of electric vehicles. Customers require functional vehicles in terms of range and drivability.

It is known in the state of the art to integrate into the luggage compartment of a vehicle, battery packs of mass exceeding 200 kg. Said battery packs have two main drawbacks, the first one is that their high weight make impossible its removal or placement by the car owners and secondly the capacity for the luggage is considerably reduced.

DE 102011076981 A1 discloses a battery system that comprises at least one battery module and a docking station on which the at least one battery module is arranged in a separately removable manner. Preferably, the docking station comprises supply and/or power connections for the battery system.

EP 2159862 A1 discloses a battery equipment of railway vehicle and a railway vehicle. This document provides battery equipment for a railway vehicle including a plurality of battery modules, each of which stores a plurality of lithium-ion cells, a battery module storage section that stores the plurality of battery modules, a control section that detects conditions of the plurality of battery modules and controls charge and discharge thereof and a case that allows the battery module storage section and the control section to be juxtaposed in a traveling direction of the vehicle. The battery equipment needs to be downsized so as to be mounted in a limited space of the railway vehicle.

From the vehicle manufacturer's side, current designs are frequently based in adapting an existing vehicle luggage compartment. Although some mass is removed if there is no internal combustion engine, there are frequently significant constraints on the location of the battery packs to respect issues such as handling and crashworthiness.

### SUMMARY OF THE INVENTION

As previously stated, the auxiliary detachable battery system object of the invention is suitable for being located in a luggage compartment of a vehicle. It comprises a plurality of removable battery modules and a support for supporting said removable battery modules which are fixable to it. The support is configured for being located covering the floor of the luggage compartment and comprises a plurality of electrical and structural connectors adapted for connecting to each of the removable battery modules.

The support is fixed to the vehicle body and shall be located such that its upper surface is parallel with the luggage floor, so when no removable battery module is installed, there is available a flat surface to put the luggage. The removable battery modules and the support also comprise fixings to keep the removable battery modules securely located, especially during a crash.

Those removable battery modules may consist in small modules, with a small mass and volume, that the car owner could put into or remove from the car in order to increase its range so that the owner can decide the balance on car range/ cost of battery pack / place for luggage according to their needs. Those modules would be easily found on the market, for instance, at service stations paying for its use and returning them when discharged. The removable battery modules could also be charged at a service station.

The removable battery modules can be grouped together to form removable packs in order to meet the voltage and power requirements of the vehicle. The series-parallel configuration of the removable pack is managed by the support.

The removable battery modules and the support have a common interface that is electrical connectors, i.e., signal and power connectors and a structural part of the removable battery modules to the support. The removable battery modules have to be easy to lift by a driver and to meet ergonomic requirements, the removable battery modules cannot be heavier than 10 kg and they also need to have safe interface connectors.

Additionally, the auxiliary detachable system object of the invention could be able to be connected to another battery pack already installed on the vehicle which would be the main battery pack and thanks to the removable battery modules the owner of the vehicle would easily extend the vehicle range.

As previously stated, the removable battery modules are fixed to the support. This support is a device that includes all of the electrical connections (power and signal) for the connection of the removable battery modules and additionally it could be required to link the removable battery modules to the battery pack already installed in the vehicle. In addition, the support could also include heating or cooling systems, the need for a cooling system depending on the type of cell chemistry and how it is used.

Additionally, the support may integrate a junction box that contains relays and fuses and the removable battery management system. In other cases, the junction box could be placed in different locations of the vehicle.

It is an object of the present invention the support of the auxiliary detachable battery system for being located in a luggage compartment of a vehicle, characterised in that it is configured for being located covering the floor of the luggage compartment and also configured for supporting a plurality of removable battery modules which are fixable to it and in that it comprises a plurality of electrical and structural connectors configured for being connected to each of the removable battery modules wherein the electrical and mechanical connectors of the support comprise a body adapted to match with the connectors of the removable battery modules.

It is a further object of the invention a removable battery module of an auxiliary detachable battery system for being located in a luggage compartment of a vehicle, characterised in that is configured for being connected to a support configured for being located covering the floor of the luggage compartment and fixable to the support and in that it comprises an electrical and structural connector configured for being connected to an electrical and mechanical connector of the support comprising a body adapted to match with the connectors of the support.

### DESCRIPTION OF THE FIGURES

To complete the description and in order to provide for a better understanding of the invention, a set of drawings is provided. Said drawings form an integral part of the description and illustrate preferred embodiments of the invention. The drawings comprise the following figures.
Figure 1 shows a perspective view of an embodiment of the auxiliary battery system located in the luggage compartment of a vehicle.
Figure 2 shows a perspective view of an embodiment of the support and a set of removable battery modules.
Figure 3 shows a perspective exploded view of the embodiment of the support of figure 2.
Figure 4 shows a perspective view of the embodiment of figure 2 showing the cooling system.
Figure 5 shows a perspective view of the embodiment of figure 2 showing a detail of the support.
Figure 6 shows a cross section of an embodiment of the power connector of the removable battery module.
Figure 7 shows a cross section of an embodiment of the power connector of the support.
Figure 8 shows a cross section of the connection of the power connectors of the module and the support also showing the path of a gas exhaust through them.

### DETAILED DESCRIPTION OF THE INVENTION

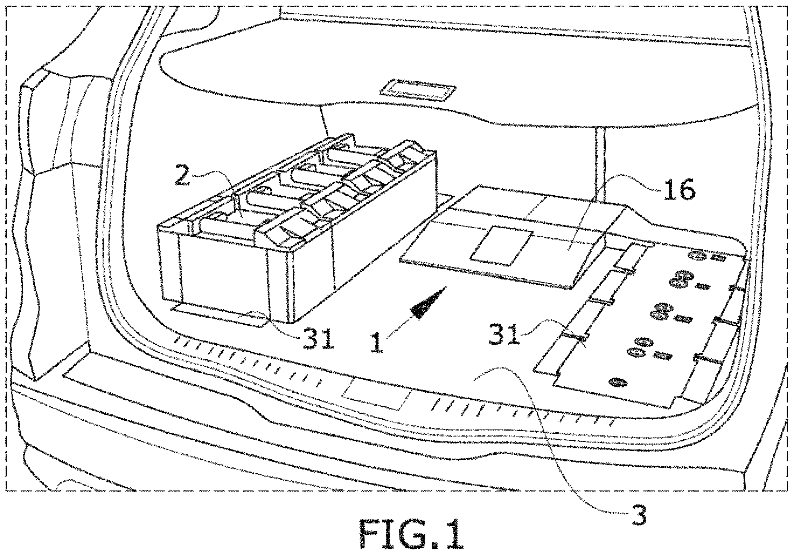

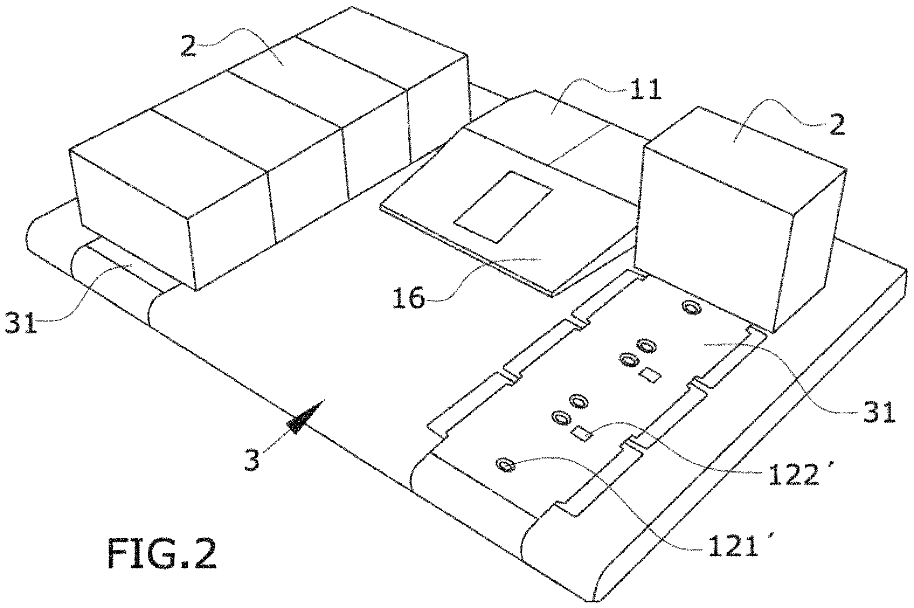

The embodiment shown in figures 1 and 2 shows an auxiliary detachable battery system (1) integrated into the luggage compartment floor of a vehicle. It comprises a support (3) located covering the floor of the compartment and configured in two branches (31), but the configuration may adopt different forms and/or different number of branches (31), for the connection of the removable battery modules (2). At each branch (31), at least one removable battery module (2), four removable battery modules (2) in the embodiment, usually in serial connection, are installed. The branches (31) are located at the right and left ends of the support (3) parallel to the sides of the vehicle, such that the central part of the support (3), i.e., the central part of the luggage compartment, is kept available for the luggage.

The support depicted in the figures also integrates a junction box (16) and a cooling fan system (11) with at least one fan.

Particularly, when the user installs removable battery modules (2) in the two branches (31), depending on the power need, either one of the branches (31) or both branches (31) or even a part of one or both branches (31) are connected and able to deliver current. The other branch (31) or portion of branch (31) is in a "standby" condition. Once the part connected is exhausted, the loaded part or portion of the part is switched on and it starts to deliver current.

The four removable battery modules (2) may be connected in several ways, for instance, four in series or two in series and two in parallel, depending on the needs. Other configurations are possible, for instance, connecting eight removable battery modules (2) at the same time that will deliver higher voltage. Also, it may be considered to produce branches (31) for less removable battery modules (2), to be used in the smallest cars, as for instance, two removable battery modules (2).

More specifically, as stated, the following two options of the embodiment are possible:
Option 1: four removable battery modules (2) at each branch (31) connected in series being possible to reach 14-60 kW as a power output and 192 V as nominal voltage.
Option 2: two removable battery modules (2) connected in series and two removable battery modules (2) connected in parallel.

To fix the removable battery modules (2) to the support (3), the user has to put the removable battery module (2) in the correct place. The support (3) has guides to ensure the correct placement of the removable battery module (2). Once the removable battery module (2) is located in its position, the user turns a handle down by means of a cam. A retention arm locks the removable battery module (2) to the support (3). The removable battery module (2) needs no extra operation by the user and provides quick and easy mounting. To release the locking mechanism the user has to turn the handle up and remove the removable battery module (2) from the support (3). A spring returns the locking mechanism to its initial position.

Additionally, to ensure the correct fixing of the removable battery module (2) to the support (3), a sensor detects if the locking operation has been successfully completed. Otherwise, the system will not deliver energy to the vehicle. A visual indicator, such as a LED, could be included to show the user that the locking operation is satisfactory. Besides the mechanical fixing function, the retention arms support the mechanical forces in the Z direction.

The main functions of removable battery module (2) packaging are:
- Integrate cells with their interconnections as well as other possible system components (cooling system, electrical components, electronics, sensors, etc.).
- Protect sensitive components of the removable battery modules (2). The structure must provide sufficient rigidity to safely hold the cells. The external housing and contacts must protect the removable battery modules (2) from potential shock, vibrations or perforations.
- Providing bi-directional sealing to prevent outside elements intrusion (water, dust...) and avoid inner products escaping (noxious gases).

An embodiment for the cylindrical cell removable battery module would be 24 cylindrical cells placed horizontally, in 3 rows of 8 cells each.

A common feature of cylindrical cell is the provision of the terminals on both ends of the cell, making it necessary to make the connections in at least two different planes. Moreover, the terminals of cylindrical cells are threaded bolts, so that the mechanical connections to the copper bars are robust and easy to fit.

The cell supports act as structural panels maintaining the relative position of the cells and facilitating the series-parallel connections.

As previously stated, all removable battery modules (2) and supports (3) have an interface. This interface consists of the signal, power and structural connectors (12, 12') of the removable battery modules (2) and of the support (3).

In order to accommodate domestic use, the connectors (12, 12') between the removable battery modules (2) and the support (3) must be quick fitting, fail safe and clean such that users do not have access to the electrical connections.

According to this, the user must be able to connect and disconnect the removable battery modules (2) without any significant effort and without any electrical risk, therefore, the removable battery modules (2) and the support (3) must be easy to lift and have safe interface connectors (12, 12'), both power connectors (121, 121') and signal connectors (122, 122').

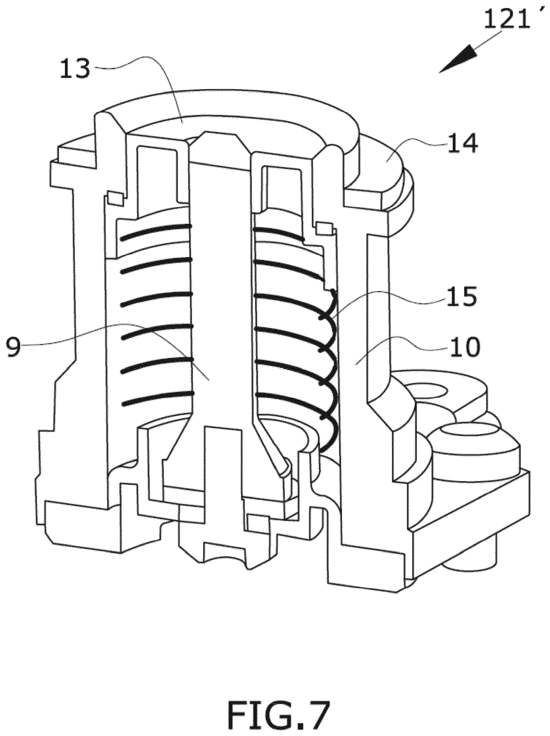

Therefore, for interconnecting the removable battery module (2) and the support (3) several connectors (12, 12') are included, having each removable battery module (2) its own connectors (12). The power connectors (121') of the support (3) disclosed in figure 7 comprise the following elements:
- An elongated conductive part (9) for electrical contact with the power connectors (121) of the removable battery module (2) and that could be dimensioned to allow high currents, for instance, higher than 100 A.
- An elongated structural part (10) surrounding the elongated conductive part (9) and having an elongated gap with the elongated conductive part (9). The elongated structural part (10) supports the mechanical efforts and matches with the power connector (121) of the removable battery module (2) and is responsible for supporting the loads in the X and Y axes of the vehicle, meaning all likely forces from accelerations, braking or crash. The elongated structural part (10) is fixed to the support (3) and it is preferably made of steel.
- A cap (13) that closes the gap between the elongated conductive part (9) and the elongated structural part (10) when the removable battery module (2) is not in its place and that avoids the entrance of dust inside the support (3). It also prevents air /gas leaks. The power connector (121) of the removable battery module (2) pushes down the cap (13) when is mounted on the power connector (121') of the support (3).
- A seal (14) that provides sealing of the connection together with the cap (13) located between the elongated conductive part (9) and the elongated structural part (10).
- A spring (15) that pushes the cap (13) to close the space between the elongated conductive part (9) and the elongated structural part (10) when the removable battery module (2) is not in place.

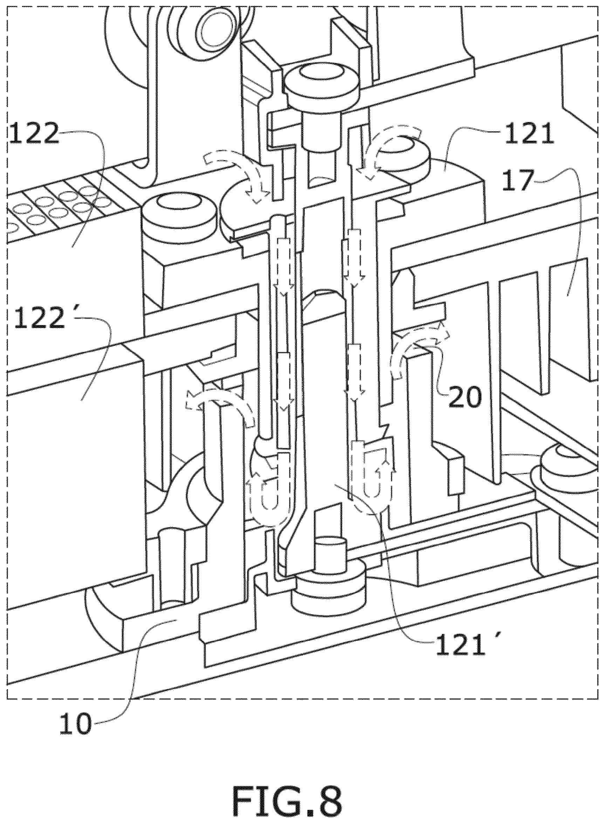

Additionally, the elongated structural part (10) comprises a lateral aperture (20) in connection with the space between the upper (5) and lower (4) plates for gas exhaust in case of leakage from the removable battery module (2), see Figure 8.

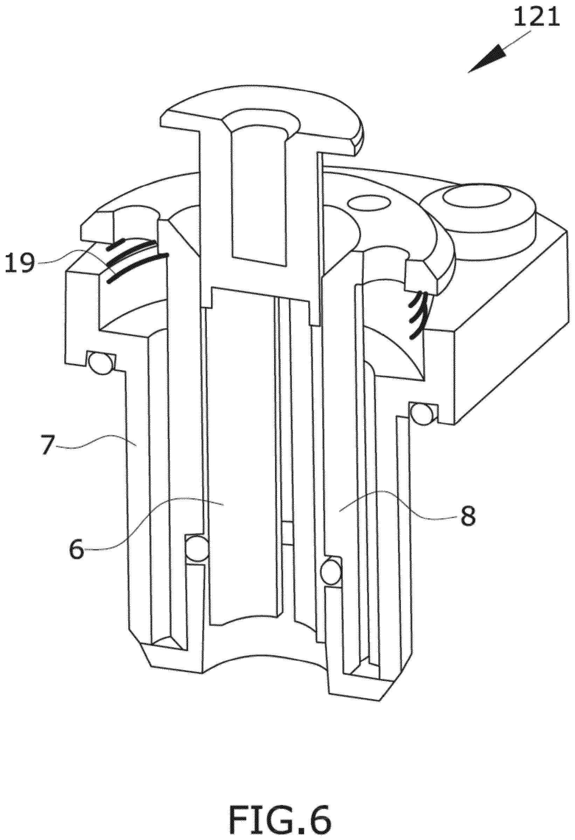

The electrical and structural interface of the removable battery module (2) comprises a body adapted to match with the interface of the support (3) that comprises (see Figure 6):
- an elongated conductive part (6) for electrical contact with the power connector (121') of the support (3),
- an elongated structural part (7) surrounding the elongated conductive part (6) for supporting structural efforts,
- a cover (8) for protecting the conductive part (6) and surrounding the elongated conductive part (6) and having an elongated gap with the elongated structural part (7) for gas exhaust in case of leakage of a cell of the battery module (2),
- an elastic element (19) connected to the cover (8) such that in case of gas leakage of the battery, the gas presses the elastic element (19) moving the cover (8) such that it allows the gas to pass through the elongated gap between the elongated conductive part (9) and the elongated structural part (10) to the power connector (121') of the support (3).

Both elements also have a signal connector (122, 122'). The above power and signal connectors (12, 12') have the following advantages:
- Quick fitting: interface connectors (12, 12') have an easy fitting and low effort from the user. This means that the user is able to connect the removable battery modules (2) to the support (3) without extra operations or tools. To connect the removable battery modules (2) to the support (3) it is only necessary to place the removable battery modules (2) in the correct position over the support (3) and push the removable battery modules (2) down.
- Clean and electrically safe fitting: interface connectors (12, 12') are covered in order to prevent any contact with conductive elements during removable battery modules (2) handling. As shown in the figures the conductive part (9, 6) is covered by a non-conductive element, i.e., by a plastic part. When the removable battery module (2) is not connected to the support (3) there is no access to the conductive parts (9, 6). When the user connects the removable battery module (2) to the support (3), the non-conductive of the removable battery module (2) pushes the non-conductive part of the support (3) and the two conductive parts make electrical contact.

- Functional integration:
   ∘ Supports mechanical efforts: The interface connectors (12, 12') resists forces in the X and Y directions. The power connectors (121, 121') have a structural part (7, 10) of steel. In the support (3) connector, the structural part (10) is screwed to the support (3). In the removable battery module (2) power connector (121), the structural part (7) is screwed to a plate of the removable battery module (2).
   ∘ Power (121, 121') and signal (122, 122') connection: The interface connector (12, 12') ensures a proper electrical connection between removable battery module (2) and support (3).
   ∘ Module (2) and support (3) sealing: The interface connector (12, 12') ensures no liquid and dust intrusion into the removable battery module (2) and the support (3), before and after connection.
   ∘ Gas exhaust: In case of cell damage or failure, the power connector (121, 121') allows evacuation of the gas from the removable battery module (2) to the support (3). In the event of a gas leak, the cover (8) of the removable battery module (2) connector goes down, by means of an elastic element, mainly a spring, and allows the gas to pass to the support (3).

In the shown embodiment the support (3) comprises a junction box (16) that includes the system relays and fuses and a battery management system. This junction box (16) could be placed anywhere in the vehicle. The relays are used to disconnect the system when it is not working, i.e., when the battery already installed in the vehicle is the one providing the energy, or to select the branch (31) that will be connected to the main power line.

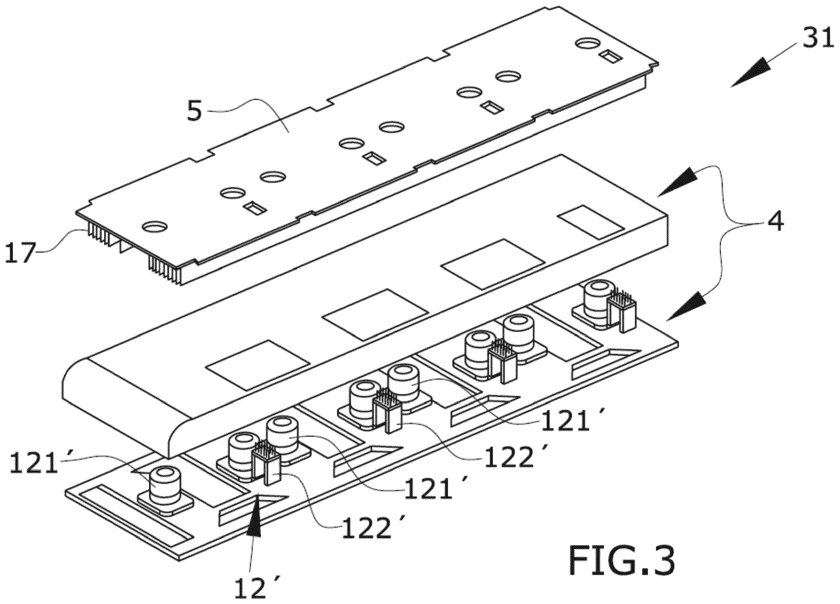

Figure 3 shows a support (3) embodiment, more specifically of one of the branches (31) that comprises a lower (4) plate configured to be attached to the vehicle luggage compartment floor . The power (121') and signal (122') connectors are mounted on this lower (4) plate, therefore they are attached to the vehicle through said lower plate (4) and, this combination results in a strong, stiff structure, able to withstand high loads without significant deformation in order to protect and retain the removable battery modules (2) in case of crash. It also comprises an upper (5) plate.

An alternative configuration would be to fix the connectors (12, 12') directly to the car body. However, this results in a higher number of screws to be fixed during the car assembly and maintaining geometric tolerances of the fixings will be much more difficult.

Below the upper (5) plate there is structural part. The main function of this part is to seal the area between the upper and lower plates (4, 5), providing a sealed area for the air cooling.

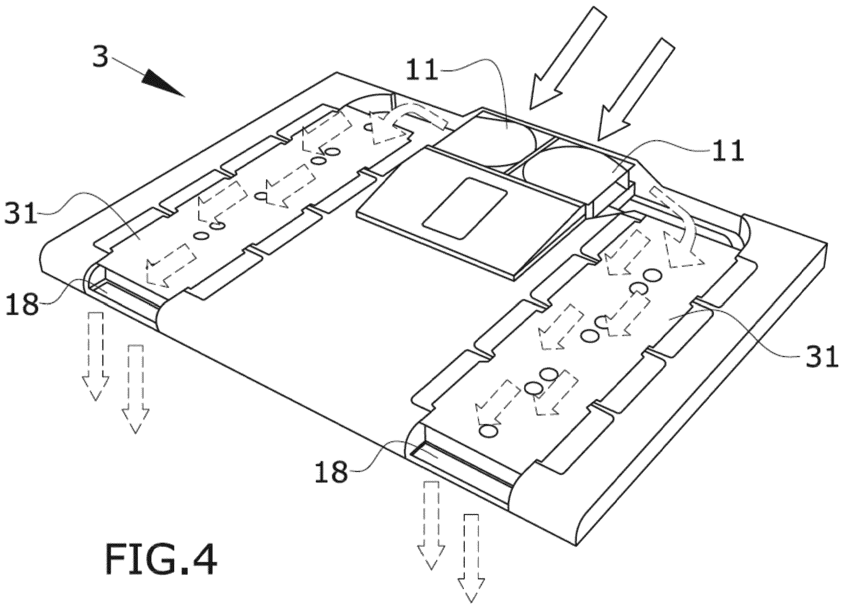

In case of a gas leakage of the cells, the air exhaust can flow to the exterior of the vehicle through an aperture (18) at the lower (4) plate as can be seen in Figure 4. If there is any gas leakage from the removable battery modules (2) cells, the gas would be transferred between the upper and the lower plates (4, 5) of the support (3) through the power connectors (121, 121') and then driven to the exterior without any contact with the passenger compartment.

Cooling fan system (11) could comprise a one-way valve or a trap door which will prevent any battery vapours or emissions being returned from the support inner channel back into the vehicle's passenger compartment.

The heat produced by the removable battery modules (2) is generally very low, so a forced air cooling may be avoided in most cases. The shown support (3) has air cooling, however, other designs could be cooled by liquid.

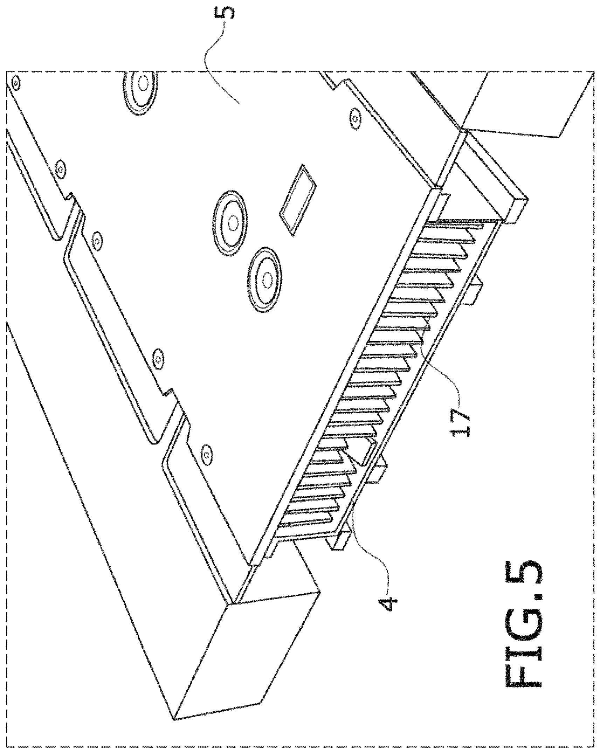

In the shown embodiment, the air, pumped by cooling fan system (11), passes between the upper and lower plates (5, 4) of the support (3) through a finned surface (17) and so cools the removable battery modules (2). As shown in figure 5, the upper (5) plate has a finned surface (17) and is in contact with the removable battery modules (2).

The cooling system of the battery pack in an electric vehicle has three main objectives:
- Ensure the optimum working temperature for the cells. To prolong the useful life of the cells the optimum temperature is around 25ºC, for the cell chemistry used in EV or HEV battery packs.
- Prevent the cells exceeding the maximum temperature provided by the manufacturer, especially in cases of charging and discharging at full power, which is when the most heat is generated.
- Minimize the temperature difference in the pack (ΔTpack) to achieve temperature homogeneity throughout the whole pack.

## Claims

1. Support (3) of an auxiliary detachable battery system (1) for being located in a luggage compartment of a vehicle, configured for being located covering the floor of the luggage compartment and also configured for supporting a plurality of removable battery modules (2) which are fixable to it (3) and comprising a plurality of signal and power connectors (12') configured for being connected to each of the removable battery modules (2) wherein the signal and power connectors (12') of the support (3) comprise a body adapted to match with the signal and power connectors (12) of the removable battery modules (2), wherein the power connectors (121') of the support (3) comprise:
- an elongated conductive part (9) for electrical contact with the power connector (121) of the removable battery module (2),
- an elongated structural part (10) surrounding the elongated conductive part (9) for supporting mechanical efforts having an elongated gap with the elongated conductive part (9),
**characterised in that** the support comprises a lower (4) and an upper (5) plate, and further comprises an exhaust gas system, and **in that** the elongated structural part (10) of the power connector (121') comprises an aperture (20) connecting the gap with the elongated conductive part (9) to the space between the lower and upper plates (4, 5) and wherein the support (3) further comprises an aperture (18) configured for being connected to the exterior of the vehicle such that in case of a gas leakage from the removable battery modules (2), the gas is transferred from the removable battery modules (2) to the gap between the elongated conductive part (9) and the elongated structural part (10) and through the aperture (20) to the space between the lower (4) and upper (5) plates and then driven to the exterior of the vehicle through the aperture (18).

2. Support (3), according to claim 1, wherein the power connectors (121') of the support (3) further comprises a cap (13) that closes the aperture of the longitudinal gap between the elongated conductive part (9) and the elongated structural part (10) when the removable battery module (2) is not connected.

3. Support (3), according to any preceding claim, wherein the lower (4) plate is attached to the signal and power connectors (12') and the upper (5) plate is configured for being in contact with the removable battery modules (2).

4. Support (3), according to claim 3, wherein the upper (5) plate comprises a finned surface (17), the fins being located between the upper (5) and the lower (4) plates.

5. Support (3), according to any preceding claim, wherein it further comprises a cooling system configured for taking air coming from a passenger's compartment of the vehicle.

6. Support (3), according to claims 5 and 3, wherein it comprises a cooling fan system (11) configured for being connected to the passenger's compartment of the vehicle and adapted to deliver air between the upper (5) and the lower (4) plates of the support (3).

7. -Support (3), according to any preceding claim, wherein it comprises at least one branch (31) of connectors (12') configured for being located parallel to the sides of the luggage compartment close to the side edge of the support (3).

8. -Auxiliary detachable battery system (1) for being located in a luggage compartment of a vehicle, **characterised in that** it comprises:
- a support (3) according to any preceding claim, and
- a plurality of removable battery modules (2) that are fixable to the support (3) and each removable battery module (2) comprising signal and power connectors (12) adapted for connecting each of the removable battery modules (2) to the support (3).

9. -Auxiliary detachable battery system (1), according to claim 9, wherein the power connector (121) of the removable battery module (2) comprises a body adapted to match with the power connector (121') of the support (3) that comprises:
- an elongated conductive part (6) for electrical contact with the power connector (121') of the support (3),
- an elongated structural part (7) surrounding the elongated conductive part (6) for supporting mechanical efforts.

10. -Auxiliary detachable battery system (1), according to claim 10, wherein the power connector (121) of the removable battery module (2) further comprises an elongated cover (8) for protecting the elongated conductive part (6) and surrounding the elongated conductive part (6) and having a gap with the elongated structural part (7) for gas exhaust in case of leakage of the battery modules (2).

11. -Removable battery module (2) of an auxiliary detachable battery system (1) for being located in a luggage compartment of a vehicle, configured for being connected to a support (3) configured for being located covering the floor of the luggage compartment and fixable to the support (3) and comprising a power and signal connector (12) configured for being connected to a power and signal connector (12') of the support (3) comprising a body adapted to match with the power and signal connectors (12') of the support (3), wherein the power connector (121) of the removable battery module (2) comprises a body adapted to match with the power connector (121') of the support (3) and comprising:
- an elongated conductive part (6) for electrical contact with the power connector (121') of the support (3),
- an elongated structural part (7) surrounding the elongated conductive part (6) for supporting mechanical efforts, and **characterized by** further comprising:
- an elongated cover (8) for protecting the elongated conductive part (6) and surrounding the elongated conductive part (6) and having an elongated gap with the elongated structural part (7) for gas exhaust in case of leakage of the gas battery,
- an elastic element (19) connected to the cover (8) such that in case of gas leakage of the battery, the gas presses the elastic element (19) moving the cover (8) such that it allows the gas to pass through the elongated gap between the elongated conductive part (6) and the elongated structural part (7) to the support (3).

12. -Removable battery module (2), according to claim 12, wherein its maximum weight is 10 kg.

## Patentansprüche

1. Träger (3) eines ablösbaren Hilfsbatteriesystems (1) zum Anordnen in einem Kofferraum eines Fahrzeugs, dazu ausgelegt, so angeordnet zu werden, dass er den Boden des Kofferraums bedeckt, und auch dazu ausgelegt, eine Vielzahl entfernbarer Batteriemodule (2) zu tragen, die daran (3) befestigbar sind, und umfassend eine Vielzahl von Signal- und Stromsteckverbindern (12'), die dazu ausgelegt sind, mit jedem der entfernbaren Batteriemodule (2) verbunden zu werden, wobei die Signal- und Stromsteckverbinder (12') des Trägers (3) einen Körper umfassen, der dazu angepasst ist, mit den Signal- und Stromsteckverbindern (12) der entfernbaren Batteriemodule (2) zusammenzupassen, wobei die Stromsteckverbinder (121') des Trägers (3) Folgendes umfassen:
- ein längliches leitendes Teil (9) für den elektrischen Kontakt mit dem Stromsteckverbinder (121) des entfernbaren Batteriemoduls (2),
- ein das längliche leitende Teil (9) umgebendes längliches strukturelles Teil (10) zum Tragen mechanischer Kräfte, das einen länglichen Spalt mit dem länglichen leitenden Teil (9) aufweist,
**dadurch gekennzeichnet, dass** der Träger eine untere (4) und eine obere (5) Platte umfasst und weiter ein Abgassystem umfasst und dass das längliche strukturelle Teil (10) des Stromsteckverbinders (121') eine Öffnung (20) umfasst, die den Spalt mit dem länglichen leitenden Teil (9) mit dem Raum zwischen der unteren und der oberen Platte (4, 5) verbindet, und wobei der Träger (3) weiter eine Öffnung (18) umfasst, die dazu ausgelegt ist, mit dem Äußeren des Fahrzeugs verbunden zu werden, sodass im Falle eines Gasaustritts aus den entfernbaren Batteriemodulen (2) das Gas aus den entfernbaren Batteriemodulen (2) in den Spalt zwischen dem länglichen leitenden Teil (9) und dem länglichen strukturellen Teil (10) und durch die Öffnung (20) in den Raum zwischen der unteren (4) und der oberen (5) Platte befördert und dann durch die Öffnung (18) ans Äußere des Fahrzeugs geführt wird.

2. Träger (3) nach Anspruch 1, wobei die Stromsteckverbinder (121') des Trägers (3) weiter eine Kappe (13) umfassen, die die Öffnung des länglichen Spalts zwischen dem länglichen leitenden Teil (9) und dem länglichen strukturellen Teil (10) schließt, wenn das entfernbare Batteriemodul (2) nicht verbunden ist.

3. Träger (3) nach einem der vorstehenden Ansprüche, wobei die untere (4) Platte an den Signal- und Steckverbindern (12') angebracht ist und die obere (5) Platte dazu ausgelegt ist, mit den entfernbaren Batteriemodulen (2) in Kontakt zu sein.

4. Träger (3) nach Anspruch 3, wobei die obere (5) Platte eine gerippte Oberfläche (17) aufweist, wobei die Rippen zwischen der oberen (5) und der unteren (4) Platte angeordnet sind.

5. Träger (3) nach einem der vorstehenden Ansprüche, wobei er weiter ein Kühlsystem umfasst, das dazu ausgelegt ist, Luft aufzunehmen, die aus einem Fahrzeuginnenraum des Fahrzeugs kommt.

6. Träger (3) nach einem der Ansprüche 5 und 3, wobei er ein Kühlgebläsesystem (11) umfasst, das dazu ausgelegt ist, mit dem Fahrzeuginnenraum des Fahrzeugs verbunden zu werden und Luft zwischen die obere (5) und die untere (4) Platte des Trägers (3) zu bringen.

7. Träger (3) nach einem der vorstehenden Ansprüche, wobei er zumindest einen Abzweigverbinder (31) der Steckverbinder (12') umfasst, der dazu ausgelegt ist, parallel zu den Seiten des Kofferraums nahe der Seitenkante des Trägers (3) angeordnet zu werden.

8. Ablösbares Hilfsbatteriesystem (1) zum Anordnen in einem Kofferraum eines Fahrzeugs, **dadurch gekennzeichnet, dass** es Folgendes umfasst:
- einen Träger (3) nach einem der vorstehenden Ansprüche und
- eine Vielzahl entfernbarer Batteriemodule (2), die an dem Träger (3) befestigbar sind, und wobei jedes entfernbare Batteriemodul (2) Signal- und Stromsteckverbinder (12) umfasst, die dazu angepasst sind, jedes der entfernbaren Batteriemodule (2) mit dem Träger (3) zu verbinden.

9. Ablösbares Hilfsbatteriesystem (1) nach Anspruch 9, wobei der Stromsteckverbinder (121) des entfernbaren Batteriemoduls (2) einen Körper umfasst, der dazu angepasst ist, mit dem Stromsteckverbinder (121') des Trägers (3) zusammenzupassen, der Folgendes umfasst:
- ein längliches leitendes Teil (6) für den elektrischen Kontakt mit dem Stromsteckverbinder (121') des Trägers (3),
- ein das längliche leitende Teil (6) umgebendes längliches strukturelles Teil (7) zum Tragen mechanischer Kräfte.

10. Ablösbares Hilfsbatteriesystem (1) nach Anspruch 10, wobei der Stromsteckverbinder (121) des entfernbaren Batteriemoduls (2) weiter eine längliche Abdeckung (8) zum Schützen des länglichen leitenden Teils (6) umfasst, die das längliche leitende Teil (6) umgibt und einen Spalt mit dem länglichen strukturellen Teil (7) für Abgas im Falle eines Lecks der Batteriemodule (2) aufweist.

11. Entfernbares Batteriemodul (2) eines ablösbaren Hilfsbatteriesystems (1) zum Anordnen in einem Kofferraum eines Fahrzeugs, dazu ausgelegt, mit einem Träger (3) verbunden zu werden, der dazu ausgelegt ist, so angeordnet zu werden, dass er den Boden des Kofferraums bedeckt, und befestigbar an dem Träger (3) und umfassend einen Signal- und Stromsteckverbinder (12), der dazu ausgelegt ist, mit einem Signal- und Stromsteckverbinder (12') des Trägers (3) verbunden zu werden, die einen Körper umfassen, der dazu angepasst ist, mit den Signal- und Stromsteckverbindern (12') des Trägers zusammenzupassen, wobei der Stromsteckverbinder (121) des entfernbaren Batteriemoduls (2) einen Körper umfasst, der dazu angepasst ist, mit dem Stromsteckverbinder (121') des Trägers (3) zusammenzupassen, und Folgendes umfasst:
- ein längliches leitendes Teil (6) für den elektrischen Kontakt mit dem Stromsteckverbinder (121') des Trägers (3),
- ein das längliche leitende Teil (6) umgebendes längliches strukturelles Teil (7) zum Tragen mechanischer Kräfte, und **dadurch gekennzeichnet, dass** er weiter Folgendes umfasst:
- eine längliche Abdeckung (8) zum Schützen des länglichen leitenden Teils (6), die das längliche leitende Teil (6) umgibt und einen länglichen Spalt mit dem länglichen strukturellen Teil (7) für Abgas im Falle eines Lecks der Gasbatterie aufweist,
- ein elastisches Element (19), das mit der Abdeckung (8) verbunden ist, sodass im Falle eines Gasaustritts aus der Batterie das Gas auf das elastische Element (19) drückt und die Abdeckung (8) dadurch so bewegt, dass sie es dem Gas ermöglicht, durch den länglichen Spalt zwischen dem länglichen leitenden Teil (6) und dem länglichen strukturellen Teil (7) des Trägers (3) durchzutreten.

12. Entfernbares Batteriemodul (2) nach Anspruch 12, wobei sein Höchstgewicht 10 kg beträgt.

## Revendications

1. Support (3) d'un système de batteries auxiliaires détachables (1) destiné à être placé dans un compartiment à bagages d'un véhicule, configuré pour être placé de façon à couvrir le fond du compartiment à bagages et également configuré pour soutenir une pluralité de modules de batterie amovibles (2) qui peuvent être fixés à lui (3) et comprenant une pluralité de connecteurs de signalisation et d'alimentation (12') configurés pour être connectés à chacun des modules de batterie amovibles (2) où les connecteurs de signalisation et d'alimentation (12') du support (3) comprennent un corps adapté pour correspondre aux connecteurs de signalisation et d'alimentation (12) des modules de batterie amovibles (2), où les connecteurs d'alimentation (121') du support (3) comprennent :
- une partie conductrice allongée (9) pour contact électrique avec le connecteur d'alimentation (121) du module de batterie amovible (2),
- une partie structurelle allongée (10) entourant la partie conductrice allongée (9) pour supporter des efforts mécaniques ayant un espace vide allongé avec la partie conductrice allongée (9),
**caractérisé en ce que** le support comprend une plaque inférieure (4) et supérieure (5), et comprend en outre un système de gaz d'échappement, et **en ce que** la partie structurelle allongée (10) du connecteur d'alimentation (121') comprend une ouverture (20) connectant l'espace vide avec la partie conductrice allongée (9) à l'espace entre les plaques inférieure et supérieure (4, 5) et où le support (3) comprend en outre une ouverture (18) configurée pour être connectée à l'extérieur du véhicule de sorte qu'en cas de fuite de gaz des modules de batterie amovibles (2), le gaz soit transféré des modules de batterie amovibles (2) dans l'espace vide entre la partie conductrice allongée (9) et la partie structurelle allongée (10) et à travers l'ouverture (20) dans l'espace entre les plaques inférieure (4) et supérieure (5) et ensuite acheminé à l'extérieur du véhicule à travers l'ouverture (18).

2. Support (3), selon la revendication 1, où les connecteurs d'alimentation (121') du support (3) comprennent en outre un capuchon (13) qui ferme l'ouverture de l'espace vide longitudinal entre la partie conductrice allongée (9) et la partie structurelle allongée (10) lorsque le module de batterie amovible (2) n'est pas connecté.

3. Support (3), selon l'une quelconque des revendications précédentes, où la plaque inférieure (4) est attachée aux connecteurs de signalisation et d'alimentation (12') et la plaque supérieure (5) est configurée pour être en contact avec les modules de batterie amovibles (2).

4. Support (3), selon la revendication 3, où la plaque supérieure (5) comprend une surface avec ailettes (17), les ailettes étant situées entre les plaques supérieure (5) et inférieure (4).

5. Support (3), selon l'une quelconque des revendications précédentes, où est en outre compris un système de refroidissement configuré pour prendre de l'air provenant d'un compartiment passagers du véhicule.

6. Support (3), selon les revendications 5 et 3, où est compris un système de ventilateurs de refroidissement (11) configuré pour être raccordé au compartiment passagers du véhicule et adapté pour délivrer de l'air entre les plaques supérieure (5) et inférieure (4) du support (3).

7. Support (3), selon l'une quelconque des revendications précédentes, où est comprise au moins une branche (31) de connecteurs (12') configurée pour être placée parallèlement aux côtés du compartiment à bagages près du bord latéral du support (3).

8. Système de batteries auxiliaires détachables (1) destiné à être placé dans un compartiment à bagages d'un véhicule, **caractérisé en ce qu'**il comprend :
- un support (3) selon l'une quelconque des revendications précédentes, et
- une pluralité de modules de batterie amovibles (2) qui peuvent être fixés au support (3) et chaque module de batterie amovible (2) comprenant des connecteurs de signalisation et d'alimentation (12) adaptés pour connecter chacun des modules de batterie amovibles (2) au support (3).

9. Système de batteries auxiliaires détachables (1), selon la revendication 9, où le connecteur d'alimentation (121) du module de batterie amovible (2) comprend un corps adapté pour correspondre au connecteur d'alimentation (121') du support (3) qui comprend :
- une partie conductrice allongée (6) pour contact électrique avec le connecteur d'alimentation (121') du support (3),
- une partie structurelle allongée (7) entourant la partie conductrice allongée (6) pour supporter des efforts mécaniques.

10. Système de batteries auxiliaires détachables (1), selon la revendication 10, où le connecteur d'alimentation (121) du module de batterie amovible (2) comprend en outre un couvercle allongé (8) pour protéger la partie conductrice allongée (6) et entourant la partie conductrice allongée (6) et possédant un espace vide avec la partie structurelle allongée (7) pour l'échappement des gaz en cas de fuite des module de batterie (2).

11. Module de batterie amovible (2) d'un système de batteries auxiliaires détachables (1) destiné à être placé dans un compartiment à bagages d'un véhicule, configuré pour être connecté à un support (3) configuré pour être placé de façon à couvrir le fond du compartiment à bagages et pouvant être fixé au support (3) et comprenant un connecteur d'alimentation et de signalisation (12) configuré pour être connecté à un connecteur d'alimentation et de signalisation (12') du support (3) comprenant un corps adapté pour correspondre aux connecteurs d'alimentation (12') du support (3), où le connecteur d'alimentation (121) du module de batterie amovible (2) comprend un corps adapté pour correspondre au connecteur d'alimentation (121') du support (3) et comprenant :
- une partie conductrice allongée (6) pour contact électrique avec le connecteur d'alimentation (121') du support (3),
- une partie structurelle allongée (7) entourant la partie conductrice allongée (6) pour supporter des efforts mécaniques,
et **caractérisé en ce qu'**il comprend en outre :
- un couvercle allongé (8) pour protéger la partie conductrice allongée (6) et entourant la partie conductrice allongée (6) et possédant un espace vide avec la partie structurelle allongée (7) pour l'échappement des gaz en cas de fuite de la batterie à gaz,
- un élément élastique (19) connecté au couvercle (8) de façon qu'en cas de fuite de gaz de la batterie, les gaz poussent contre l'élément élastique (19) déplaçant le couvercle (8) de façon à permettre aux gaz de passer à travers l'espace vide allongé entre la partie conductrice allongée (6) et la partie structurelle allongée (7) jusqu'au support (3).

12. Module de batterie amovible (2), selon la revendication 12, où son poids maximum est de 10 kg.
